# EUROPÄISCHE PATENTSCHRIFT

(11) **EP 3 473 562 B1**
(45) Veröffentlichungstag und Bekanntmachung des Hinweises auf die Patenterteilung: **01.09.2021**
(21) Anmeldenummer: 18202091.7
(22) Anmeldetag: 23.10.2018
(51) Int. Cl.: B65G 1/04, B65G 1/06

(54) **VERFAHREN UND HOCHREGALLAGERTECHNOLOGIE ZUM LAGERN VON STÜCKGUT MITTELS ORTHOGONALER QUEREINLAGERUNG**
METHOD AND SHELF MOUNT TECHNOLOGY FOR STORING GOODS USING ORTHOGONALER TRANSVERSE STORAGE
PROCÉDÉ ET TECHNOLOGIE DE STOCKAGE DES ÉTAGÈRES HAUTES PERMETTANT DE STOCKER LA MARCHANDISE AU MOYEN DU STOCKAGE TRANSVERSAL ORTHOGONAL

(30) Priorität: 23.10.2017 DE 102017124681
(43) Veröffentlichungstag der Anmeldung: 24.04.2019
(73) Patentinhaber: Föller, Jörg, 75334 Straubenhardt (DE)
(72) Erfinder: Föller, Jörg, 75334 Straubenhardt (DE)
(74) Vertreter: RPK Patentanwälte Reinhardt, Pohlmann und Kaufmann Partnerschaft mbB

(56) Entgegenhaltungen:
- EP-A1- 3 243 769
- EP-A2- 1 964 792
- FR-A1- 2 192 957
- US-A1- 2015 225 187

## Beschreibung

Die Erfindung betrifft ein Verfahren zum Ausführen eines Arbeitsspiels eines Hochregallagers, ein Hochregallager zum Lagern von Lagerobjekten wie Stückgut und eine entsprechende Steuerung zum Durchführen des Verfahrens.

Wenn im Rahmen dieser Erfindung von "Lagerobjekten" die Rede ist, bezieht sich dieser Begriff auf jede Art von lagerbarem Objekt, das in Hochregallagern gelagert wird, sei es für sich oder in Behältern. In der Regel handelt es sich aber meist um Stückgut. Insofern werden die Begriffe Stückgut und Lagerobjekt austauschbar verwendet.

Wenn im Rahmen dieser Erfindung von "Sequenzieren" die Rede ist, wird hierunter in der Logistik die Bildung einer Auslagerungsreihenfolge von Lagerobjekten verstanden. Während ein Einlagern von Stückgut in ein Hochregallager auch chaotisch erfolgen kann, ist meist eine Ausgabe in einer durch Transport oder Bedarf vorbestimmten Reihenfolge erwünscht.

### Stand der Technik

Hochregallager, darin verwendete Fördermittel sowie entsprechende Steuerungen und Betriebsverfahren sind bekannt. Zum Transportieren von Stückgut können insbesondere Stetigförderer wie Fließbänder oder Unstetigförderer verwendet werden, beispielsweise in Form von speziellen, auf eine Lagerform abgestimmten Regalbediengeräten, Staplern und/oder Unterfahrschleppern. Unterfahrschlepper können ein Stückgut unterfahren und dieses zwischen zwei Orten transportieren, insbesondere durch Anheben und Verfahren entlang einer Transportrichtung. Dazu können die Unterfahrschlepper einen entsprechenden Antrieb und einen Hubtisch zum Anheben und Absenken des Stückguts aufweisen. Das Stückgut kann beispielsweise auf einem Rollwagen gelagert sein, der mittels des Unterfahrschleppers unterfahrbar ist.

Sogenannte Regalbediengeräte können in einer zwischen zwei Regalreihen gebildeten Gasse eines Hochregallagers in Richtung der Gasse verfahren werden. Regalbediengeräte sind meist zweidimensional verfahrbar, also in einer Längsrichtung und einer Hochrichtung der Gasse. Damit ist es möglich, innerhalb der Gasse unterschiedliche Lagerplätze der jeweiligen Regalreihen anzusteuern und entsprechende Ein- und Auslagerungen vorzunehmen. Es sind Verfahren bekannt, in denen Unterfahrschlepper orthogonal zum Regalbediengerät verfahren, um eine Ein- oder Auslagerung von Stückgütern oder Lagerobjekten durchzuführen.

Grundsätzlich können Hochregallager eine Übergabestelle zum Übergeben einzulagernder Stückgüter, eine Vorzone, die die Übergabestelle aufweist, sowie ggf. zum Transport der Stückgüter erforderliche Förderer, insbesondere Stetigförderer, Eckumsetzer und/oder Ähnliches aufweisen. Ferner sind Hochregallager bekannt, die in einer sogenannten Silobauweise errichtet werden, also wand- und deckentragend ausgeführt sind, sodass für eine entsprechende das Hochregallager umgebende Halle keine separate Konstruktion erforderlich ist.

Da in Hochregallagern meist mehrere Lagerplätze hintereinander belegt werden, führt dies meist dazu, dass verschiedene Stückgüter, die sich auf einem Lagerplatz befinden, gemeinsam bis zum Ein-/Auslagerungspunkt verbracht werden müssen, bevor das wirklich benötigte Teil entnommen werden kann. Die nicht benötigten Teile müssen wieder ins Lager befördert werden. Eine Sequenzierung im Hochregallager selbst erfolgt üblicherweise nicht.

Aus der US 2016/0016731A1 ist es bekannt, ein Lagersystem mit verschiedenen Lagersektionen auf verschiedenen horizontalen Ebenen auszustatten. Fördermittel mit einer Aufnahmefläche werden in den so gebildeten Lagerzellen entlang paralleler Pfade horizontal auf zusätzlichen Bewegungspfaden bewegt, wobei die Aufnahmefläche in der Lage ist, Lagerobjekte auf verschiedenen horizontalen Ebenen in einer gewünschten Sequenz aufzunehmen. Durch das Anfahren verschiedener horizontaler Ebenen ist jedoch ein nicht zu unterschätzender Raumbedarf erforderlich, der für andere Bewegungen innerhalb des Lagersystems nicht zur Verfügung steht. Zudem ist die Aufnahmefläche (board) nur eingeschränkt beweglich und nicht in mehrere Teilflächen zergliedert.

Die US 2015/0225187 A1 offenbart ein Lagersystem mit verschiedenen Lagerabschnitten zur Lagerung von Lagerobjekten in Reihen und auf unterschiedlichen Höhen. Regalbediengeräte laufen schienengeführt zwischen Regalreihen, allerdings auf verschiedenen Höhen. Ein weiteres Fördermittel bewegt sich in einer zweiten horizontalen Richtung, um im Zusammenspiel mit den Regalbediengeräten, eine bestimmte Sequenz von Lagerobjekten zu erzeugen. Dies erfolgt durch eine intensive Umlagerung der Lagerobjekte (Abs. 0020 bis 0026). Die US 2015/0225187 A1 offenbart ein Verfahren zum Ausführen eines Arbeitsspiels eines Hochregallagers mit mehreren Regalreihen und mit mehreren Lagerplätzen, die mit bedarfsweise mehreren Lagerobjekten befüllbar sind, mit:
- Bilden wenigstens eines Ausfahrbewegungspfads zwischen einem Lagerplatz des Hochregallagers und wenigstens einer quer zum Ausfahrbewegungspfad angeordneten Ausfahrt, wobei der Ausfahrbewegungspfad zwischen zwei Regalreihen angeordnet ist,
- Fördern wenigstens eines in dem Hochregallager an einem Lagerplatz lagerbaren Lagerobjekts mittels einer Hubvorrichtung entlang des Ausfahrbewegungspfads zur Ausfahrt,
- Puffern des wenigstens einen Lagerobjekts zwischen dem Fördern quer zum Ausfahrbewegungspfad neben der Ausfahrt auf Lagerplätzen an einer Pufferstelle, im Hochregallager, ausgehend von der Hubvorrichtung entlang einer Einführrichtung auf die Pufferstelle,
- Entnehmen mehrerer Lagerobjekte aus der Pufferstelle mittels eines entlang der Ausfahrt bewegbaren, unabhängig von der Hubvorrichtung betätigbaren Fördermittels.

Die US 2015/0225187 A1 offenbart ein Hochregallager zum Lagern von Lagerobjekten, mit:
- mehreren Lagerplätzen, die mit bedarfsweise mehreren Lagerobjekten befüllbar sind,
- mehreren Regalreihen,
- wenigstens einem zwischen zwei Regalreihen angeordneten Ausfahrbewegungspfad,- wenigstens einer quer zum Ausfahrbewegungspfad angeordneten Ausfahrt,
- wenigstens einer Hubvorrichtung zum Fördern wenigstens eines in dem Hochregallager an einem Lagerplatz lagerbaren Lagerobjekts entlang des Ausfahrbewegungspfads zur Ausfahrt,
- wobei neben der Ausfahrt Lagerplätze als Pufferstelle für Lagerobjekte von der Ausfahrt aus zugänglich im Hochregallager angeordnet sind, in die Lagerobjekte von der wenigstens einen Hubvorrichtung quer zum Ausfahrbewegungspfad und ausgehend von der Hubvorrichtung entlang einer Einführrichtung auf die Pufferstelle ein- und auslagerbar sind,
- wobei wenigstens ein an einem unabhängig von der Hubvorrichtung betätigbaren Fördermittel angebrachtes Förderhilfsmittel zum selektiven Picken wenigstens eines der auf den einzeln anfahrbaren Lagerplätzen an der Pufferstelle befindlichen Lagerobjekte vorgesehen ist.

Aus der US 2016/0060037 A1 ist ein Lagersystem mit Lagerabschnitten und Lagerplätzen für Lagerobjekte in Regalreihen auf unterschiedlichen Höhen bekannt, wobei ein vertikal arbeitender Hub-Sequenzer zur Erzeugung einer gewünschten Sequenz vorgesehen ist. Auch hier ist eine intensive Umlagerung zur Erzeugung einer Sequenz erforderlich.

### Darstellung der Erfindung

Aufgabe der Erfindung ist es, eine Spielzeit eines Lagersystems, insbesondere eines Hochregallagers, mit möglichst geringem Aufwand zu verbessern, wobei mindestens zwei Lagerobjekte gleichzeitig ausgelagert werden, um dabei eine frei wählbare Gangfolge (Sequenz) der Stückgüter zu erzeugen.

Dies wird mit einem Verfahren gemäß den Merkmalen des Patentanspruchs 1 sowie durch ein Hochregallager mit den Merkmalen des Anspruches 8 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Diese Aufgabe ist durch ein Verfahren gemäß Anspruch 1 zum Bilden eine Sequenzierung innerhalb eines Arbeitsspiels zwischen Regalbediengeräten und einem vorzugsweise als Orthogonalshuttle ausgebildeten Fördermittel gelöst. Das Hochregallager weist mehrere Lagerplätze, die mit bedarfsweise mehreren Lagerobjekten wie Stückgut befüllbar sind, und mehrere Regalreihen auf. Zwischen einem Lagerplatz des Hochregallagers und wenigstens einer quer zum Ausfahrbewegungspfad angeordneten Ausfahrt wird ein Ausfahrbewegungspfad gebildet, der zwischen zwei Regalreihen angeordnet ist. Es können bei längeren Regalreihen also auch mehrere Ausfahrbewegungspfade vorhanden sein, die in den Gassen des Hochregallagers gebildet werden. Entlang des Ausfahrbewegungspfads wird wenigstens ein in dem Hochregallager an einem Lagerplatz lagerbares Lagerobjekt mittels einer Hubvorrichtung wie eines Regalbediengeräts zur Ausfahrt gefördert. Erfindungsgemäß wird dabei das wenigstens eine Lagerobjekt zwischen dem Fördern quer zum Ausfahrbewegungspfad neben der Ausfahrt in einer Pufferstellung gepuffert. Das heißt, die Hubvorrichtung lagert die Lagerobjekte quer, vorzugsweise orthogonal, zum Ausfahrbewegungspfad neben der Ausfahrt ein. Dort können dann ein oder mehrere Lagerobjekte von einem vom Regalbediengerät unabhängigen Fördermittel wie z. B. einem Orthogonalshuttle auf dessen Arbeitsebene aus der Pufferstellung entnommen werden. Da diese Entnahme aber quer zur Einführrichtung auf den Pufferplatz erfolgt, kann die Entnahme unmittelbar entlang der Ausfahrt in der gewünschten Reihenfolge zur Sequenzierung der Lagerobjekte erfolgen und nicht auf zusätzlichen Ebenen. Damit erfolgt die Sequenzierung bereits im Hochregallager, so dass die Lagerobjekte in sequenzierter Reihenfolge aus dem Hochregallager gefördert werden können. Eine zusätzliche Umlagerung wie im Stand der Technik ist nicht erforderlich.

Das Verfahren kann sowohl zum Einlagern als auch zum Auslagern eines Stückguts oder gleichzeitig mehrerer Stückgüter angewandt werden, also eines Einzelspiels zum Einlagern oder Auslagern. Außerdem kann das Verfahren für ein Doppelspiel, also ein gleichzeitiges Ein- und Auslagern angewandt werden. Unter einem Bewegungspfad kann eine beliebige Bewegung einer Vorrichtung zur landgebundenen Förderung entlang eines Pfads verstanden werden, insbesondere schienengebunden und/oder flurgebunden.

Vorzugsweise erfolgt das Überbrücken der Regalreihen zum Bilden der Ausfahrt. Dadurch ist es möglich, den Ausfahrbewegungspfad innerhalb des Hochregallagers, insbesondere über einzelne Lagerplätze der überbrückten Regalreihen hinweg, zu bilden. Das Stückgut kann also innerhalb der Abmessungen des Hochregallagers mehr oder weniger beliebig in den drei Raumrichtungen von der Ausfahrt in dieses hinein oder zu dieser hin aus dem Hochregallager hinaus gefördert werden. Der Ausfahrbewegungspfad verläuft quer, vorzugsweise orthogonal zur Ausrichtung der Regalreihen. Insbesondere können analog auch mehrere parallele Pfade gebildet werden, die quer zu einer Ausrichtung der Regalreihen bzw. Gassen des Hochregallagers verlaufen. Es ist denkbar, entsprechend mehrere Ausfahrten an diese anzuschließen oder diese nur für lagerinterne Bewegungen der Stückgüter zu verwenden, beispielsweise zum Puffern und/oder Kommissionieren/Sequenzieren. Insbesondere kann auf das Hochregallager umgebende Förderer wie Rollbahnen, Eckumsetzer oder Ähnliches verzichtet werden. Dadurch ergibt sich ein besonders kleiner Raumbedarf, wobei dennoch über den mittels des Überbrückens bildbaren Ausfahrbewegungspfad eine sehr schnelle Ein- und Auslagerung des Stückguts und damit eine Minimierung der Spielzeit bei hoher Verfügbarkeit und Sequenzierung der Lagerobjekte erfolgen kann.

Unter Puffern kann ein Zwischenlagern verstanden werden. Insbesondere erfolgt das Puffern auf einem Pufferlagerplatz. Bei dem Pufferlagerplatz kann es sich um einen einzelnen Lagerplatz an einer beliebigen Stelle des Hochregallagers links oder rechts neben und parallel zur Ausfahrt handeln. Bevorzugt handelt es sich um einen Lagerplatz in einer Ebene des Hochregallagers, auf der sich die wenigstens eine Ausfahrt befindet. Zum Ein- oder Auslagern des Stückguts kann dieses dann insbesondere direkt von dem Pufferlagerplatz innerhalb der entsprechenden Ebene mittels eines Überbrückens über die Gasse hinweg gefördert werden. Gemäß einer Variante ist es möglich, Stückgüter aus unterschiedlichen Puffern entlang eines Pickpfades ein- bzw. auszulagern. Durch das Verfahren ist also ein flexibel optimierbares Hochregallager hinsichtlich unterschiedlicher Kriterien möglich.

Eine weitere Ausführungsform des Verfahrens sieht ein Überbrücken oder zumindest zeitweises Überbrücken wenigstens einer zwischen den zwei Regalreihen des Hochregallagers verbleibenden Gasse des Hochregallagers mittels einer Brücke zum Bilden der an den Ausfahrbewegungspfad anschließenden Ausfahrt des Hochregallagers vor. Zum Bilden der Ausfahrt ist besonders ressourcenschonend lediglich die Brücke erforderlich.

Dabei ist es möglich, mittels der Brücke jeweils zwei sich gegenüberliegende Lagerplätze der jeweiligen Regalreihen zu überbrücken. Vorteilhaft kann mittels der Brücke das Be- oder Entlagern des entsprechenden Lagerplatzes erfolgen, und zwar beim Auslagern nach dem Puffern und beim Einlagern vor dem Puffern. Es wird ersichtlich, dass im Vergleich zu üblichen Hochregallagern zumindest in einer Dimension, nämlich horizontal entlang der Gasse zwei unterschiedliche Möglichkeiten zur Förderung des Stückgutes bestehen und zusätzlich auf derselben Ebene eine Puffermöglichkeit vorhanden ist. Dadurch können Ein- und Auslagervorgänge und/oder Kommissionierungen sowie Sequenzierungen mit einem höheren Durchsatz erfolgen, sodass das Arbeitsspiel des Hochregallagers signifikant verbessert werden kann. Diese Strategie kann z.B. für ein Einzelspiel, ein Einzelspiel, bestehend aus einer Kommissionierung verschiedener Stückgüter, ein Doppelspiel, insbesondere zum Ein- und Auslagern zumindest zweier Stückgüter oder mehrere Stückgüter verwendet werden. Vorteilhaft kann bei einem hohen Durchsatz eine gewünschte Reihenfolge der Stückgüter auf der Pickfahrt realisiert werden.

Vorzugsweise werden für die Ausfahrt feststehende Abschnitte im Bereich der Regalreihen mit der Brücke zur Bildung der Ausfahrt unter zeitweisem Überbrücken zweier eine Gasse bildenden Regalreihen des Hochregallagers verbunden. Damit ist eine feste Struktur innerhalb des Hochregallagers gegeben. Die Ausfahrt kann sich dabei auf unterschiedlichen Ebenen des Hochregallagers befinden, grundsätzlich ist es auch bei Verwendung weiterer Hubvorrichtungen möglich, eine Ausfahrt bildende Pfade auf verschiedenen Ebenen oder auch übereinander vorzusehen.

Ausfahrbewegungspfad und Ausfahrt schneiden sich vorzugsweise, da dadurch ein platzsparender Aufbau möglich ist. Daher wird die Gasse durch Aufheben des Überbrückens zur Bildung des die Ausfahrt schneidenden Ausfahrbewegungspfads für die Hubvorrichtung frei gesetzt. Dadurch lässt sich im Bereich der Brücke derselbe Bewegungsraum für ein entlang der Ausfahrt bewegliches Fördermittel und eine entlang dem Ausfahrbewegungspfad bewegliche Hubvorrichtung nutzen, so dass im Hochregallager selbst der vorhandene Raum effizient ausgenutzt werden kann.

In einer bevorzugten Ausführungsform erfolgt ein Unterfahren und Anheben des Lagerobjekts bzw. Stückguts zum Fördern des Stückguts quer, vorzugsweise orthogonal zum Ausfahrbewegungspfad und/oder zum Pickbewegungspfad und/oder zum Puffern des Stückguts. Das Unterfahren und Anheben des Stückguts erfolgt bevorzugt mittels eines Hubtisches eines Unterfahrschleppers (Shuttles) mit darauf angeordneten Lastaufnahmemittel, welche als ausfahrbare Tische, Gurt- oder Rollenförderer, Gabelzinken oder einfache verfahrbare Bleche realisiert sein können. Dadurch kann bei einem sehr geringen Raumbedarf der Transport des Stückgutes erfolgen. Insbesondere ist es möglich, dass das unstetige Fördermittel die Dimension in einer x-Richtung und einer y-Richtung des eigentlich zu transportierenden Stückgutes nicht vergrößert. Lediglich durch die geringe Hubbewegung in z-Richtung ergibt sich eine geringfügige Vergrößerung des Raumbedarfes zum Transportieren des Stückgutes. Dadurch können der Ausfahrbewegungspfad und/oder der Pickbewegungspfad in einer minimalen Dimension vorgehalten werden.

Insbesondere ist es denkbar, die Bewegungspfade lediglich mittels der einzelnen Lagerplätze und der die jeweilige Gasse überbrückenden Brücken darzustellen. Dazu weisen die entsprechenden bevorzugt beidseitig angeordneten Lagerplätze in Bewegungsrichtung Lagerbewegungspfäde auf, die zusammen mit der entsprechenden Brücke zu dem Ausfahr-, Pickbewegungspfad ergänzt werden können. Um das Lagersystem des Hochregallagers kollisionsfrei zu halten, weisen die einzelnen Fördermittel und/oder Lagerplätze anstelle von sonst ggf. erforderlichen Anschlägen entsprechende Steuerungsmittel auf, um die beim Handling des Stückguts erforderlichen Bewegungsabläufe entsprechend zu limitieren. Das entsprechende zum Unterfahren und Anheben erforderliche Fördermittel kann ein fahrerloses flurgebundenes und/oder schienengebundenes Transportfahrzeug sein. Dementsprechend können die verwendeten Bewegungspfade eine Führungsvorrichtung wie z.B. Schienen, insbesondere beidseitige Schienen, z.B. in Form eines U oder C -Profils aufweisen.

Das erfindungsgemäße Verfahren befasst sich mit der Verwendung eines Fördermittels und eines Förderhilfsmittels. Erfindungsgemäß weist das Lagersystem des Hochregallagers, an dem das Verfahren ausführbar ist, ein entlang der Ausfahrt bewegbares Fördermittel, ein Förderhilfsmittel und die Hubvorrichtung auf. Bei dem Fördermittel und dem Förderhilfsmittel kann es sich um Unstetigförderer handeln. Bei der Hubvorrichtung handelt es sich z.B. um ein Regalbediengerät, das zweidimensional die Lagerplätze innerhalb der Gasse anfahren kann, die die Stückgüter in die Pufferposition ein- und auslagern.

Bei dem Förderhilfsmittel handelt es sich z.B. um ein Lastaufnahmemittel das einen gemeinsamen Handlingbewegungspfad, insbesondere in Form einer Schiene zusammen mit dem ersten Fördermittel befährt. Dadurch können das Anfahren der Lagerplätze, das Puffern und ein dabei erfolgendes Kommissionieren in besonders kurzer Zeit erfolgen. Vorzugsweise können das erste Fördermittel und das Förderhilfsmittel aus der Gasse hinausbewegt werden. Besonders bevorzugt ist es denkbar, das Förderhilfsmittel fest mit dem ersten Fördermittel, beispielsweise in Form eines Lastaufnahmemittels zu verbinden. Dadurch kann ein gesamter Raumbedarf des Lagersystems bzw. des Hochregallagers im Vergleich zu einer Anzahl lagerbarer Stückgüter weiter verbessert werden, wobei dennoch die vorab beschriebenen Vorteile erzielbar sind.

Bevorzugt erfolgt das Verlagern des Förderhilfsmittels entlang eines Handlingbewegungspfades. Dadurch erfolgt eine schnellere und flexiblere Bedienung der Lagerplätze, in denen sich das Förderhilfsmittel bewegt. Diese Ebene, insbesondere die Pufferebene, kann also durch zwei Fördermittel, die zwar die gemeinsame Handlingebene nutzen, die jedoch unabhängig voneinander ansteuerbar sind, bedient werden.

Die Aufgabe ist ferner durch ein Hochregallager gemäß Anspruch 8 gelöst. Das Hochregallager weist ein vorab beschriebenes Fördermittel auf und ist eingerichtet, ausgelegt, konstruiert und/oder programmiert zum Durchführen eines vorab beschriebenen Verfahrens. Es ergeben sich die vorab beschriebenen Vorteile. Das Hochregallager weist insgesamt wenigstens eine Hubvorrichtung, wenigstens ein Fördermittel und ein Förderhilfsmittel auf. Dadurch kann eine besonders flexible und schnelle Be- und Entlagerung erfolgen. Außerdem können zwei sich gegenüberliegende Lagerplätze ggf. mittels einer zumindest zeitweise den Ausfahrtbewegungspfad überbrückenden Brücke überbrückt werden, was eine zusätzliche Flexibilität des Hochregallagers bewirkt.

Das Hochregallager weist mehrere Lagerplätze auf, die mit bedarfsweise mehreren Lagerobjekten befüllbar sind. In der Gasse zwischen je zwei von mehreren Regalreihen ist wenigstens ein Ausfahrbewegungspfad vorgesehen, der in wenigstens einer, quer zum Ausfahrbewegungspfad angeordneten Ausfahrt mündet. Wenigstens eine Hubvorrichtung dient zum Fördern wenigstens eines in dem Hochregallager an einem Lagerplatz lagerbaren Lagerobjekts entlang des Ausfahrbewegungspfads zur Ausfahrt. Neben der Ausfahrt sind Lagerplätze als Pufferstelle für Lagerobjekte von der Ausfahrt aus zugänglich angeordnet, in die Lagerobjekte von der wenigstens einen Hubvorrichtung quer zum Ausfahrbewegungspfad ein- und auslagerbar sind. Wenigstens ein Fördermittel ist zum Verlagern des wenigstens einen Lagerobjekts entlang der Ausfahrt vorgesehen, wobei wenigstens ein am Fördermittel angebrachtes Förderhilfsmittel zum selektiven Picken wenigstens eines der auf der Pufferstelle befindlichen Lagerobjekte quer zur Ausfahrt und in sequenzierter Reihenfolge vorgesehen ist. Durch diesen Aufbau können die Spielzeiten beim Ein- und Auslagern verringert werden und vor allem kann ein Sequenzieren bereits im Hochregallager erfolgen.

Der Handlingbewegungspfad wird vorteilhaft mittels Fördermitteln und Förderhilfsmittel befahren, sodass eine schnellere und flexiblere Ein- und Auslagerung erfolgen kann. Eine zumindest zeitweise den Ausfahrbewegungspfad überbrückende Brücke verbindet im Bereich der Regalreihen vorgesehene feststehende Abschnitte der Ausfahrt miteinander. Dadurch kann der Ausfahrbewegungspfad, entlang dem sich die Hubvorrichtung bewegt, die Ausfahrt schneiden, entlang der sich das Fördermittel bewegt.

Vorzugsweise weist das entlang der Ausfahrt bewegbare Fördermittel ein oder mehrere, wie z.B. wenigstens zwei, vorzugsweise wenigstens vier, mit Förderhilfsmitteln versehene individuell betätigbare Stellplätze auf, so dass Lagerobjekte verschiedenster Größe ein- und ausgelagert und sequenziert der Pufferstelle entnommen oder übergeben werden können.

Weitere Vorteile, Merkmale und Einzelheiten ergeben sich aus den Unteransprüchen und der nachfolgenden Beschreibung, in der - ggf. unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung, ggf. auch unabhängig von den Ansprüchen, und können insbesondere zusätzlich auch Gegenstand einer oder mehrerer separaten Anmeldung/en sein. Gleiche, ähnliche und/oder funktionsgleiche Teile sind mit gleichen Bezugszeichen versehen.

### Kurzbeschreibung der Figuren

Im Folgenden wird die Erfindung an Hand eines in den Figuren dargestellten Ausführungsbeispieles näher erläutert. Es zeigen:
- Fig. 1 bis 6: eine schematische Abfolge eines erfindungsgemäßen Verfahrens zum Ausführen eines Arbeitsspiels eines Hochregallagers,
- Fig. 7: eine schematische Draufsicht auf ein Hochregallager,
- Fig. 8: eine dreidimensionale Ansicht eines Fördermittels,
- Fig. 9: eine Ansicht des Fördermittels gemäß Fig. 8 in einer Ansicht von schräg oben auf die möglichen Stellplätze des Förderhilfsmittels,
- Fig. 10a bis 10c: verschiedene Ansichten des mit unterschiedlichen Lagerobjekten beladenen Fördermittels,
- Fig. 11a bis 11d: verschiedene Ansichten des mit unterschiedlichen Lagerobjekten beladenen Fördermittels in verschiedenen Pickstellungen,
- Fig. 12a, 12b: die Isochrone eines Regalbediengeräts bei einer Ausgestaltung eines Hochregallagers nach dem Stand der Technik sowie bei einer erfindungsgemäßen Ausgestaltung,
- Fig. 13a, 13b: Darstellung der Zugriffszeiten eines Regalbediengeräts bei einer Ausgestaltung eines Hochregallagers nach dem Stand der Technik sowie bei einer erfindungsgemäßen Ausgestaltung,

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

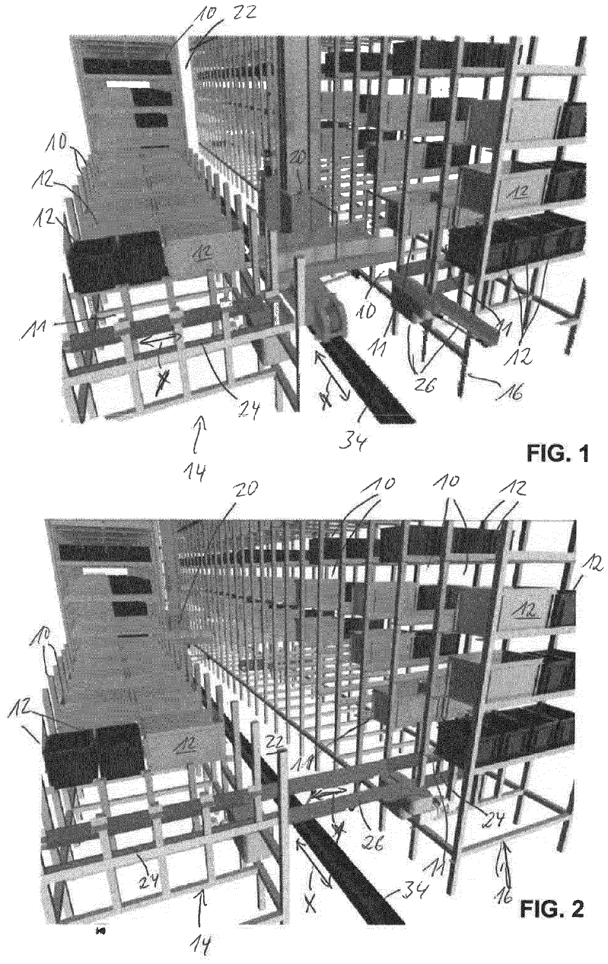

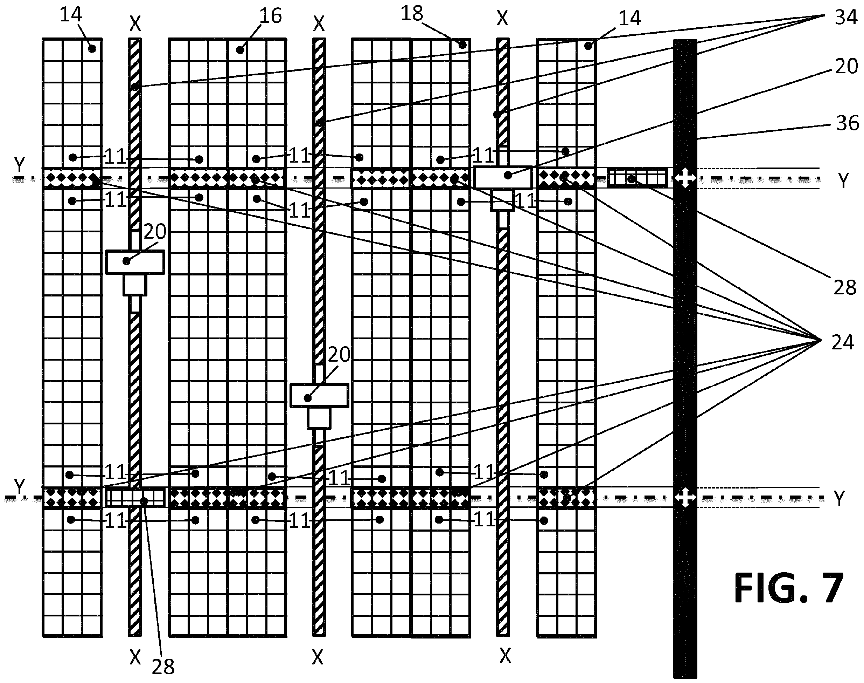

Die Fig. 1 bis 6 zeigen ein Lagersystem wie ein Hochregallager in einer dreidimensionalen Ansicht von schräg vorne oben, wobei zur Erhöhung der Übersichtlichkeit ein Teil des Hochregallagers abgeschnitten wurde. Fig. 7 zeigt ein derartiges Hochregallager in Draufsicht mit zugehöriger Vorzone V, in der ein Stetigförderer 36 oder eine Workstation vorgesehen sein kann. Im Folgenden wird auf die Fig. 1 bis 7 gemeinsam Bezug genommen. Das Lagersystem weist ein Hochregallager und eine mit den einzelnen Komponenten des Lagersystems 10 zusammenwirkende, zeichnerisch nicht dargestellte Steuerung auf. Mittels der Steuerung können Einlagerungs- und Auslagerungsvorgänge des Hochregallagers des Lagersystems gesteuert, überwacht und/oder gespeichert werden. Die Steuerung ist also zum Betreiben des Lagersystems eingerichtet und/oder programmiert.

Das Hochregallager weist nebeneinander angeordnet mehrere Regalreihen 14, 16 und 18 (Fig. 7) auf. Die Regalreihen 16 und 18 sind jeweils als Achtfachregalreihe ausgebildet, weisen also jeweils acht hintereinander liegende Lagerplätze 10 auf. Die in Fig. 7 außenliegende Regalreihe 14 ist als Doppelregalreihe ausgelegt, weist also jeweils eine Vielzahl von jeweils vier hintereinander liegenden Lagerplätzen 10 auf. Grundsätzlich können aber auch mehr als zwei bzw. vier Lagerplätze je Regalfach vorgesehen sein. Ebenso können auch weitere Regalreihen vorgesehen sein.

Zwischen den Regalreihen 14, 16, 18 verbleibt je eine Gasse 22. Die Gassen 22 weisen jeweils einen horizontal entlang der Gasse 22 verlaufenden Handlingbewegungspfad auf, der im Rahmen dieser Erfindung als Ausfahrbewegungspfad x bezeichnet wird. Der Ausfahrbewegungspfad x ist als schienengebundener oder spurgeführter Bewegungspfad ausgebildet und weist dazu eine zentrale Schiene 34 auf, an der Räder von Fördermitteln des Lagersystems 10 abrollbar sind. Entlang des Ausfahrbewegungspfads x können also Fördermittel wie die Hubvorrichtung 20, die hier als Regalbediengerät ausgebildet ist, linear entlang der Richtung der Gasse 22 bewegt werden. Dabei können auch mehr als eine Hubvorrichtung 20 je Gasse 22 vorgesehen sein.

Außerdem weist das Hochregallager des Lagersystems 10 gemäß Fig. 7 eine Vorzone V auf, in der ein hier als Ausfahrt y bezeichneter Bewegungspfad beginnt bzw. endet. Die Ausfahrt y ist quer, vorzugsweise orthogonal zum Ausfahrbewegungspfad x angeordnet. Die Vorzone V dient als Handlingsfläche für in dem Hochregallager einzulagernde Lagerobjekte 12 wie Stückgüter. Es ist denkbar, mehrere Ausfahrten y vorzusehen. Entlang der Ausfahrt werden die Stückgüter zum Ein- und Auslagern befördert.

Gemäß Fig. 1 bis 6 werden in dem Hochregallager Lagerobjekte 12 gelagert. Dazu weist jedes Regalfach mehrere Lagerplätze 10 auf, die mit bedarfsweise mehreren Lagerobjekten 12 befüllbar sind. Lagerobjekte können dabei einzelnen Stückgüter aber auch die in den Figuren dargestellten Behälter unterschiedlicher Größe sein. Die Hubvorrichtung 20 dient zum Fördern wenigstens eines in dem Hochregallager an einem Lagerplatz 10 lagerbaren Lagerobjekts 12 entlang des Ausfahrbewegungspfads x zur Ausfahrt y und umgekehrt.

Neben der Ausfahrt y sind Lagerplätze 10 als Pufferstelle 11 für Lagerobjekte 12 von der Ausfahrt y aus zugänglich angeordnet, wie im Folgenden noch erläutert wird. Die Hubvorrichtung holt beim Auslagern das Lagerobjekt von seinem jeweiligen Lagerplatz 10 und bringt es gemäß Fig. 1 zur Pufferstelle 11 neben der Ausfahrt y, wobei in der Regel der Inhalt des gesamten Regalfachs von der Hubvorrichtung 20 mit allen dort gelagerten Lagerobjekten 12 transportiert wird. Um die Fahrbewegung der Hubvorrichtung entlang des Ausfahrbewegungspfads x nicht zu stören, ist in diesem Moment die Ausfahrt y vorübergehend unterbrochen, indem eine dort vorgesehen Brücke 26 aus dem Weg geräumt, hier verschwenkt ist. Dies ist erforderlich, weil sich Ausfahrbewegungspfad x, entlang dem sich die Hubvorrichtung 20 bewegt, und Ausfahrt y schneiden, entlang der sich das Fördermittel 28 bewegt.

Die Hubvorrichtung 20 lagert die Lagerobjekte 12 quer zum Ausfahrbewegungspfad x ein bzw. aus, d.h. in Fig. 1 links und rechts von der Gasse 22. Da dieses Ein- bzw. Auslagern aber neben der Ausfahrt y erfolgt, sind damit die einzelnen Lagerplätze 10 und damit auch die einzelnen Lagerobjekte 12 durch ein geeignetes Fördermittel von der Ausfahrt y aus selektiv zugänglich. Dazu ist wenigstens ein Fördermittel 28 zum Verlagern des wenigstens einen Lagerobjekts 12 entlang der Ausfahrt y vorgesehen, das im Ausführungsbeispiel als ein Orthogonalshuttle ausgebildet ist. Da dieses Fördermittel auf der Ausfahrt y unabhängig von der Hubvorrichtung 20 betätigbar ist, können bereits dadurch die Spielzeiten der Hubvorrichtung optimiert werden.

Am Fördermittel 28 ist ferner ein Förderhilfsmittel 30 zum selektiven Picken wenigstens eines der auf der Pufferstelle 11 befindlichen Lagerobjekte 12 quer zur Ausfahrt und in sequenzierter Reihenfolge vorgesehen. Damit ist es möglich, die Lagerplätze 10 an der Pufferstelle 11 einzeln anzufahren, so dass die Lagerobjekte 12 bereits im Hochregallager sequenziert werden können.

Die Ausfahrt y weist im Bereich der Regalreihen 14, 16, 18 feststehende Abschnitte 24 auf, die z.B. als Schienen für das Fördermittel 28 ausgebildet sind. Diese Abschnitte 24 lassen sich, wenn sich die Hubvorrichtung 20 nicht im Bereich der Ausfahrt y befindet, mit einer zumindest zeitweise den Ausfahrbewegungspfad x überbrückende Brücke 26 zur Ausfahrt y miteinander verbinden, auf der sich das Fördermittel bewegt.

Die zwischen den Regalreihen 14, 16, 18 des Hochregallagers verbleibende Gasse 22 bildet den an die Ausfahrt y anschließenden Ausfahrbewegungspfad x.

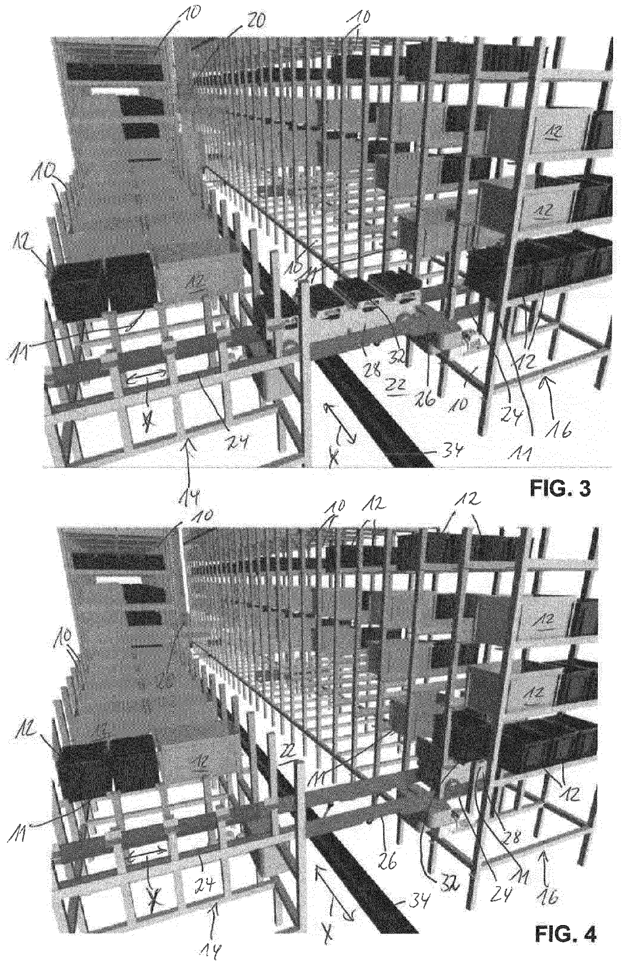

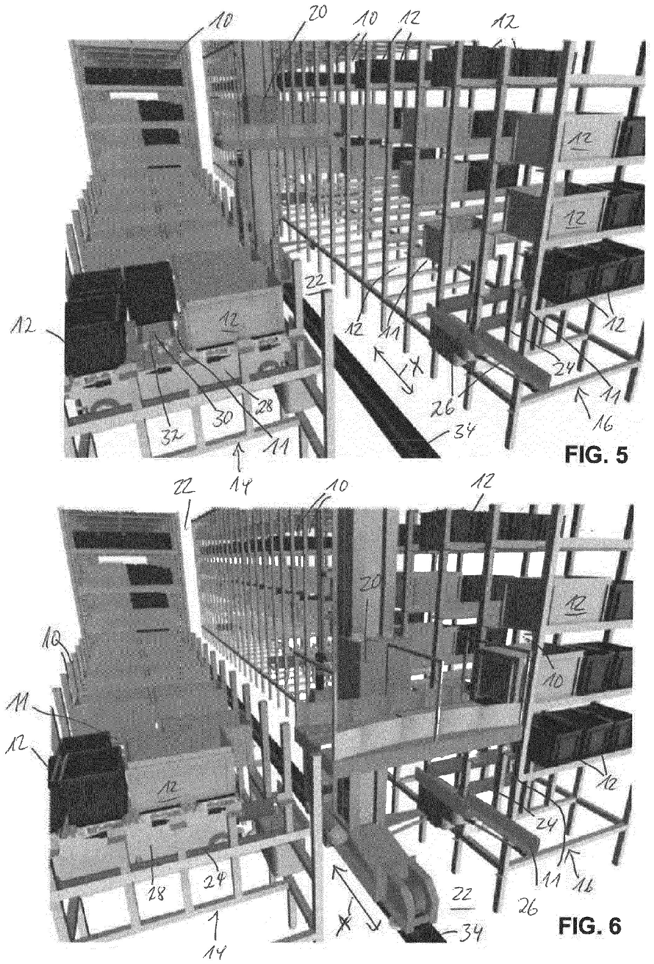

Verfahrensgemäß wird zum Ausführen eines Arbeitsspiels des Hochregallagers wenigstens ein Ausfahrbewegungspfad x zwischen einem Lagerplatz 10 des Hochregallagers und wenigstens einer quer zum Ausfahrbewegungspfad x angeordneten Ausfahrt y gebildet, wobei der Ausfahrbewegungspfad x zwischen zwei Regalreihen 14, 16, 18 angeordnet ist. Wenigstens ein in dem Hochregallager an einem Lagerplatz 10 lagerbares Lagerobjekt 12 wird gemäß Fig. 1 mittels einer Hubvorrichtung 20 entlang des Ausfahrbewegungspfads x zur Ausfahrt y befördert. Dort wird das Lagerobjekt 12 zwischen dem Fördern quer zum Ausfahrbewegungspfad x neben der Ausfahrt y in einer Pufferstellung gepuffert. In diesem Zustand kann die Brücke 26 gemäß Fig. 2 geschlossen werden, so dass sich zusammen mit den Abschnitten 24 die Ausfahrt y bildet. Gemäß Fig. 3 kann dann ein Fördermittel 28 entlang der Ausfahrt y seitlich neben die Pufferstelle 11 fahren. So kann das Fördermittel gemäß Fig. 4 ein oder mehrere Lagerobjekte 12 aus der Pufferstellung entlang der Ausfahrt y in der gewünschten Reihenfolge entnehmen und gleichzeitig sequenzieren. Dazu können auch Lagerobjekte gemäß Fig. 5 vom Fördermittel 28 an anderer Stelle neben der Ausfahrt ein- und ausgelagert werden. Im Anschluss daran können die Lagerobjekte 12 mittels des Fördermittels in sequenzierter Reihenfolge aus dem Hochregallager gefördert werden.

Gemäß Fig. 6 wird die zwischen zwei Regalreihen 14, 16, 18 des Hochregallagers verbleibende Gasse 22 zum Bilden der an den Ausfahrbewegungspfad x anschließenden Ausfahrt y zeitweise unterbrochen, indem die Brücke 26 weggeschwenkt wird, um der Hubvorrichtung freie Fahrt zu gestatten. Im Bereich der Regalreihen 14, 16, 18 sind feststehende Abschnitte 24 der Ausfahrt y vorgesehen, die mit der Brücke 26 zur Bildung der Ausfahrt y unter zeitweisem Überbrücken zweier die Gasse 22 bildenden Regalreihen 14, 16, 18 verbunden werden. Die Gasse 22 wird durch Aufheben des Überbrückens zur Bildung des die Ausfahrt y schneidenden Ausfahrbewegungspfads x für die Hubvorrichtung 20 freigesetzt. Beim Befördern werden die Lagerobjekte 12 orthogonal zum Ausfahrbewegungspfads x zum Ein- oder Auslagern des Lagerobjekts 12 unterfahren und angehoben.

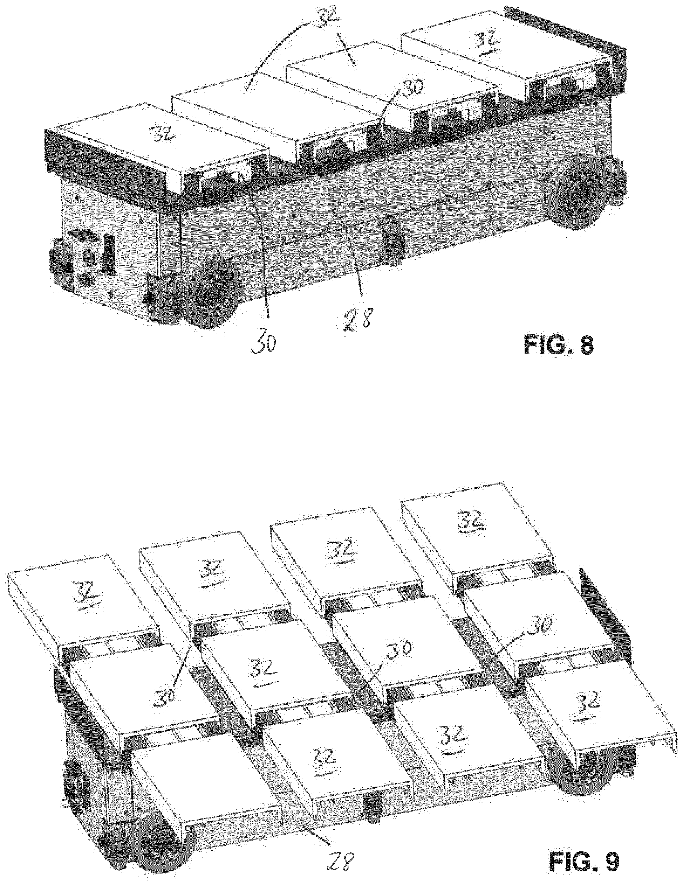

Das Fördermittel weist gemäß Fig. 8, 9 mehrere mit Förderhilfsmitteln 30 versehene individuell betätigbare Stellplätze 32 auf, wobei das Sequenzieren der Lagerobjekte 12 mittels der Förderhilfsmittel 30 auf den Stellplätzen 32 des Fördermittels 28 erfolgt. Fig. 8 zeigt, dass das Fördermittel 28 mehrere, im Ausführungsbeispiel vier, Stellplätze 32 aufweist.

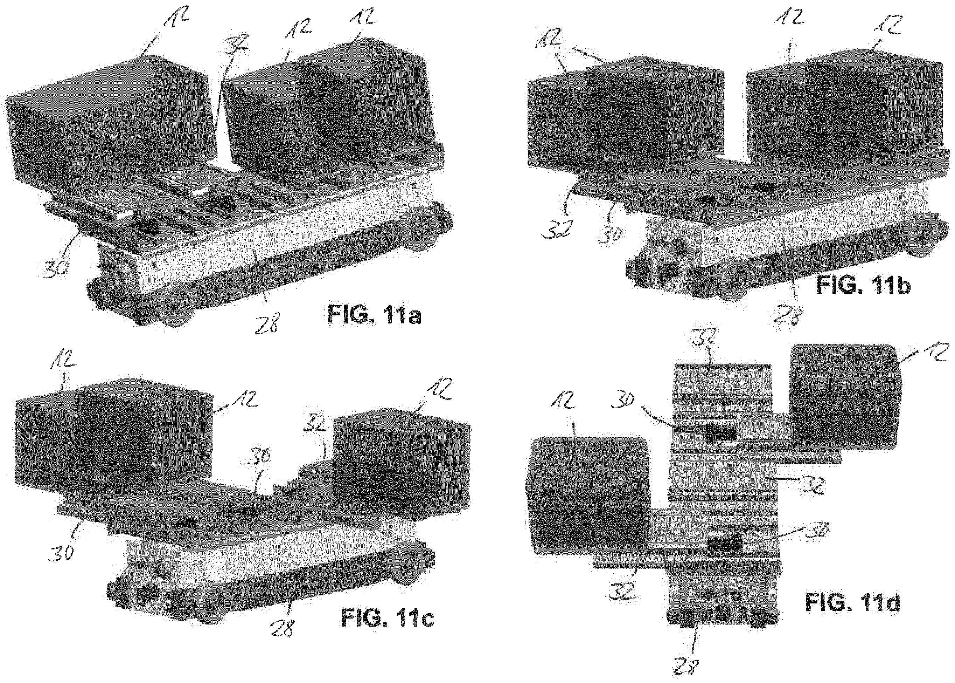

Dabei sind die Förderhilfsmittel 30 so ausgestaltet, dass jeder dieser Stellplätze 32 gemäß Fig.9 in eine Position links oder rechts vom Fördermittel 28 überführt werden kann, um dadurch selektiv einzelne Lagerobjekte 12 herauszupicken. Vorzugsweise ist jeder der Stellplätze 32 mittels der Förderhilfsmittel 30 individuell betätigbar. Dies zeigen die Fig. 11a bis 11d, die die Bewegungsmöglichkeiten der Förderhilfsmittel quer, vorzugsweise orthogonal und damit parallel zum Ausfahrbewegungspfad x zeigen.

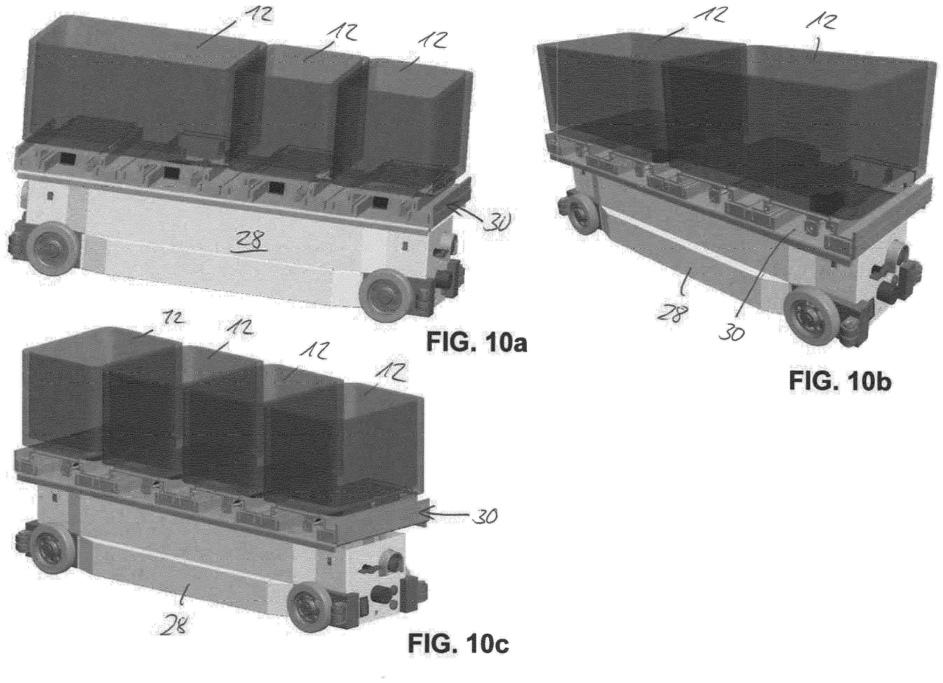

Grundsätzlich ist eine beliebige Anzahl von Stellplätzen 32 auf dem Fördermittel 28 möglich. Eine Anzahl von vier Stellplätzen hat jedoch den Vorteil, dass gemäß Fig. 10a bis 10c wahlweise vier kleine Lagerobjekte 12 oder ein großes und zwei kleine Lagerobjekte 12 oder zwei große Lagerobjekte 12 befördert werden können. Zur Beförderung von großen Lagerobjekten 12 werden vorzugsweise mehrere Förderhilfsmittel 30 gleichzeitig, parallel verfahren.

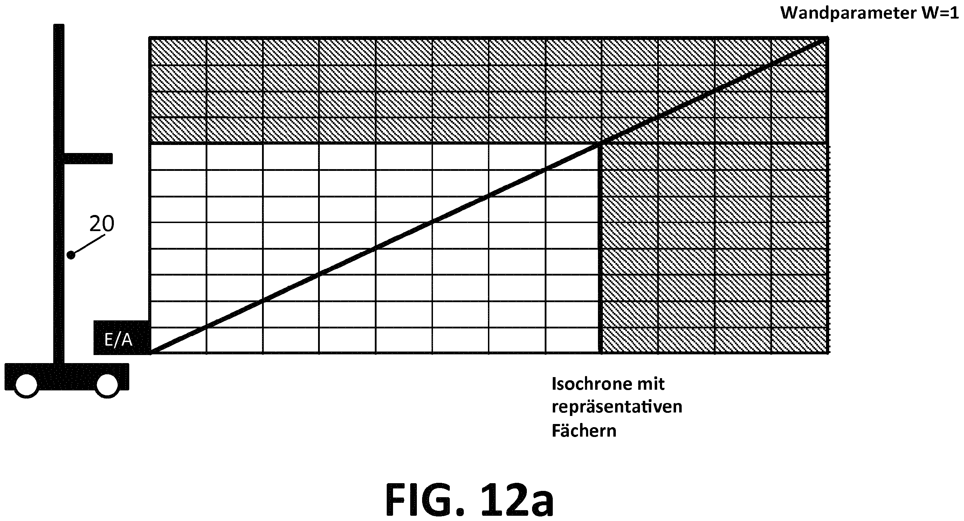

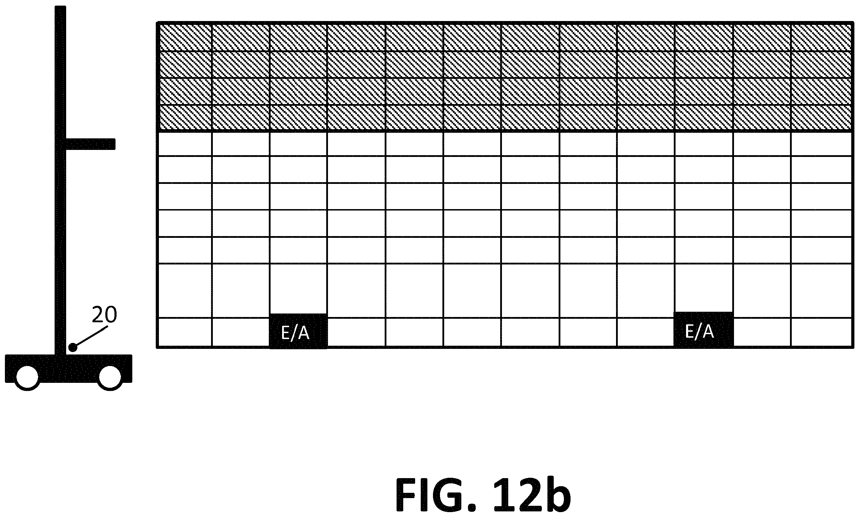

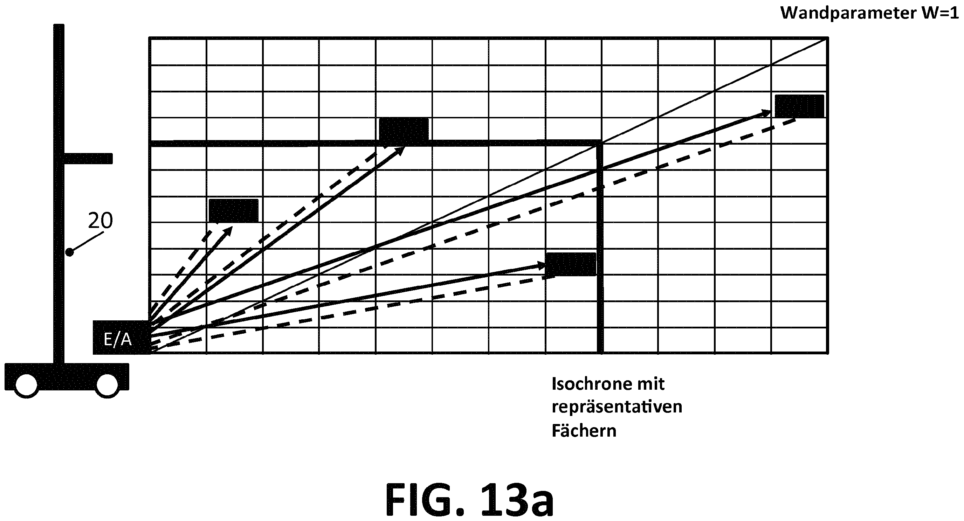

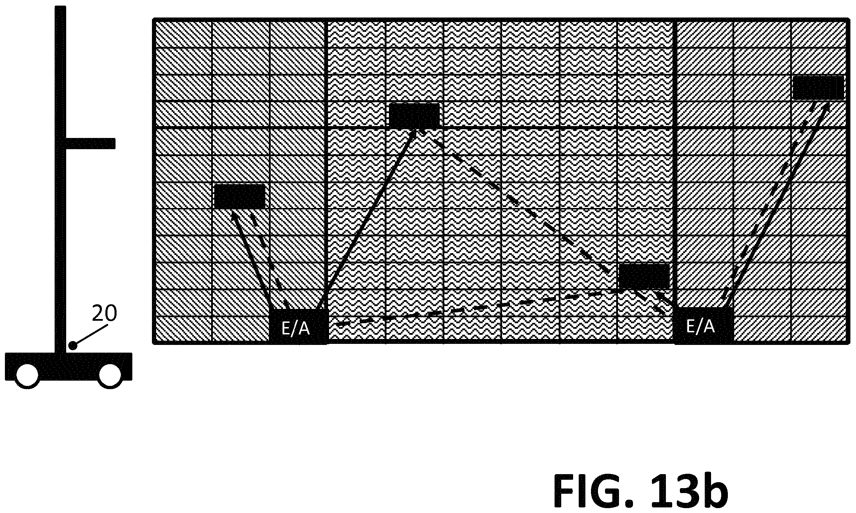

Fig. 12a, 12b sowie 13a, 13b verdeutlichen die Vorteile des Verfahrens. Fig. 12a, 12b zeigen die Isochrone, von der aus ein Regalbediengerät ausgehend vom Ein-/Auslagerpunkt E/A ein Fach in gleicher Zeit erreichen kann. Bei einer Ausgestaltung nach dem Stand der Technik gemäß Fig. 12a, bei dem es nur einen solchen Punkt gibt, endet dieser Bereich ab einem gewissen Punkt aufgrund des Abstandes. Erfolgt dagegen eine Verlagerung der Ein-/ Auslagerpunkte E/A ins Hochregallager durch einen orthogonalen Bewegungspfad im Lager gemäß Fig. 12b, besteht dieser Abstand zwar nach oben hin ebenfalls, in der Horizontalen kann jedoch eine Optimierung stattfinden.

Dies zeigen auch gemäß Fig. 13a für eine Lösung nach dem Stand der Technik und gemäß Fig. 13b für eine Lösung nach der Erfindung die erforderlichen Spielzeiten des Lagerbediengeräts bei vier verstreut gelagerten Lagerobjekten. In der Praxis ist mit einer um etwa 20% verringerten Spielzeit zu rechnen.

### Bezugszeichenliste

- 10: Lagerplatz
- 11: Pufferstelle
- 12: Lagerobjekt
- 14, 16, 18: Regalreihe
- 20: Hubvorrichtung
- 22: Gasse
- 24: Abschnitte von y
- 26: Brücke
- 28: Fördermittel
- 30: Förderhilfsmittel
- 32: Stellplatz
- 34: Schiene
- 36: Stetigförderer
- x: Ausfahrbewegungspfad
- y: Ausfahrt
- V: Vorzone

## Patentansprüche

1. Verfahren zum Ausführen eines Arbeitsspiels eines Hochregallagers mit mehreren Regalreihen (14, 16, 18) und mit mehreren Lagerplätzen (10), die mit bedarfsweise mehreren Lagerobjekten (12) befüllbar sind, mit:
- Bilden wenigstens eines Ausfahrbewegungspfads (x) zwischen einem Lagerplatz (10) des Hochregallagers und wenigstens einer quer zum Ausfahrbewegungspfad (x) angeordneten Ausfahrt (y), wobei der Ausfahrbewegungspfad (x) zwischen zwei Regalreihen (14, 16, 18) angeordnet ist,
- Fördern wenigstens eines in dem Hochregallager an einem Lagerplatz (10) lagerbaren Lagerobjekts (12) mittels einer Hubvorrichtung (20) entlang des Ausfahrbewegungspfads (x) zur Ausfahrt (y),
- Puffern des wenigstens einen Lagerobjekts (12) zwischen dem Fördern quer zum Ausfahrbewegungspfad (x) neben der Ausfahrt (y) auf Lagerplätzen an einer Pufferstelle (11) im Hochregallager, ausgehend von der Hubvorrichtung entlang einer Einführrichtung auf die Pufferstelle,
- Entnehmen mehrerer Lagerobjekte (12) aus der Pufferstelle (11) mittels eines entlang der Ausfahrt (y) bewegbaren, unabhängig von der Hubvorrichtung (20) betätigbaren Fördermittels (28) mit wenigstens einem Förderhilfsmittel (30) zum selektiven Picken wenigstens eines der auf der einzeln anfahrbaren Lagerplätzen an der Pufferstelle (11) befindlichen Lagerobjekte (12) quer zur Ausfahrt als auch quer zur Einführrichtung auf die Pufferstelle und in der gewünschten Reihenfolge zur Sequenzierung der Lagerobjekte (12) bereits auf dem Fördermittel (28) im Hochregallager ohne Umlagerung der Lagerobjekte (12),
- Fördern der Lagerobjekte (12) auf dem Fördermittel (28) in sequenzierter Reihenfolge aus dem Hochregallager.

2. Verfahren nach Anspruch 1, **gekennzeichnet durch**:
- Überbrücken oder zumindest zeitweises Überbrücken wenigstens einer zwischen den zwei Regalreihen (14, 16, 18) des Hochregallagers verbleibenden Gasse (22) des Hochregallagers zum Bilden der an den Ausfahrbewegungspfad (x) anschließenden Ausfahrt (y) des Hochregallagers.

3. Verfahren nach Anspruch 1 oder 2, **gekennzeichnet durch**:
- Verbinden der im Bereich der Regalreihen (14, 16, 18) feststehenden Abschnitte (24) der Ausfahrt (y) mit einer Brücke (26) zur Bildung der Ausfahrt (y) unter zeitweisem Überbrücken zweier eine Gasse (22) bildenden Regalreihen (14, 16, 18) des Hochregallagers.

4. Verfahren nach Anspruch 2 oder 3, **gekennzeichnet durch**:
- Freisetzen der Gasse (22) durch Aufheben des Überbrückens zur Bildung des die Ausfahrt (y) schneidenden Ausfahrbewegungspfads (x) für die Hubvorrichtung (20).

5. Verfahren nach einem der vorhergehenden Ansprüche, **gekennzeichnet durch**:
- Unterfahren und Anheben des Lagerobjekts (12) zum Fördern des Lagerobjekts (12) orthogonal zum Ausfahrbewegungspfad (x) zum Ein- oder Auslagern des Lagerobjekts (12).

6. Verfahren nach einem der vorhergehenden Ansprüche, **gekennzeichnet durch**:
- Entnehmen von Lagerobjekten (12) mittels des Fördermittels (28) mit mehreren mit den Förderhilfsmitteln (30) versehenen individuell betätigbaren Stellplätzen (32),
- Sequenzieren der Lagerobjekte (12) mittels der Förderhilfsmittel (30) auf den Stellplätzen (32) des Fördermittels (28).

7. Verfahren nach Anspruch 6, **dadurch gekennzeichnet, dass** ein größeres Lagerobjekt (12) mittels mehrerer gleichzeitig parallel betätigbarer Förderhilfsmittel (30) ein- oder auslagerbar ist.

8. Hochregallager zum Lagern von Lagerobjekten (12), mit:
- mehreren Lagerplätzen (10), die mit bedarfsweise mehreren Lagerobjekten (12) befüllbar sind,
- mehreren Regalreihen (14, 16, 18),
- wenigstens einem zwischen zwei Regalreihen (14, 16, 18) angeordneten Ausfahrbewegungspfad (x),
- wenigstens einer quer zum Ausfahrbewegungspfad (x) angeordneten Ausfahrt (y),
- wenigstens einer Hubvorrichtung (20) zum Fördern wenigstens eines in dem Hochregallager an einem Lagerplatz (10) lagerbaren Lagerobjekts (12) entlang des Ausfahrbewegungspfads (x) zur Ausfahrt (y),
- wobei neben der Ausfahrt (y) Lagerplätze (10) als Pufferstelle (11) für Lagerobjekte (12) von der Ausfahrt (y) aus zugänglich im Hochregallager angeordnet sind, in die Lagerobjekte (12) von der wenigstens einen Hubvorrichtung quer zum Ausfahrbewegungspfad (x) und ausgehend von der Hubvorrichtung entlang einer Einführrichtung auf die Pufferstelle ein- und auslagerbar sind,
- wobei wenigstens ein an einem unabhängig von der Hubvorrichtung (20) betätigbaren Fördermittel (28) angebrachtes Förderhilfsmittel (30) zum selektiven Picken wenigstens eines der auf den einzeln anfahrbaren Lagerplätzen an der Pufferstelle (11) befindlichen Lagerobjekte (12) quer zur Ausfahrt als auch quer zur Einführrichtung auf die Pufferstelle (11) und in sequenzierter Reihenfolge bereits auf dem Fördermittel (28) vorgesehen ist.
- wobei das Fördermittel (28) mehrere Lagerobjekte (12) aus der Pufferstelle (11) ohne Umlagerung entnimmt und die mehreren Lagerobjekte (12) entlang der Ausfahrt (y) in sequenzierter Reihenfolge aus dem fördert.

9. Hochregallager nach Anspruch 8, **dadurch gekennzeichnet, dass** wenigstens eine zwischen den zwei Regalreihen (14, 16, 18) des Hochregallagers verbleibende Gasse (22) des Hochregallagers den an die Ausfahrt (y) anschließenden Ausfahrbewegungspfad (x) des Hochregallagers bildet.

10. Hochregallager nach Anspruch 8 oder 9, **dadurch gekennzeichnet, dass**
eine zumindest zeitweise den Ausfahrbewegungspfad (x) überbrückende Brücke (26) im Bereich der Regalreihen (14, 16, 18) feststehende Abschnitte (24) der Ausfahrt (y) miteinander verbindet und
sich der Ausfahrbewegungspfad (x), entlang dem sich die Hubvorrichtung (20) bewegt, und die Ausfahrt (y) schneiden, entlang der sich das Fördermittel (28) bewegt.

11. Hochregallager nach einem der Ansprüche 8 bis 10, **dadurch gekennzeichnet, dass** das entlang der Ausfahrt (y) bewegbare Fördermittel (28) mehrere mit den Förderhilfsmitteln (30) versehene individuell oder gleichzeitig parallel betätigbare Stellplätze (32) aufweist.

## Claims

1. Method for implementing an operation of a high bay storage unit with a plurality of rows of shelves (14, 16, 18) and with a plurality of storage locations (10), which can be optionally filled with a plurality of storage objects (12), with:
- forming at least one moving out path (x) between a storage location (10) of the high bay storage unit and at least one exit (y) arranged transversely to the moving out path (x), wherein the moving out path (x) is arranged between two rows of shelves (14, 16, 18),
- conveying at least one storage object (12) which is storable in the high bay storage unit in a storage location (10) by means of a reciprocating device (20) along the moving out path (x) to the exit (y),
- caching the at least one storage object (12) in between the conveying transversely to the moving out path (x) adjacent to the exit (y) in storage places at a caching location (11) in the high bay storage unit, starting from the reciprocating device along an introducing direction to the caching location,
- removing a plurality of storage objects (12) from the caching location (11) by means of a conveying means (28) which is movable along the exit (y) and which is actuable independently of the reciprocating device (20) and which has at least one conveying auxiliary device (30) for selectively picking at least one of the storage objects (12) located at the individually accessible storage locations in the caching location (11) transversely to the exit and also transversely to the introducing direction to the caching location and in the desired order for sequencing the storage objects (12) already at the conveying means (28) in the high bay storage unit without rearrangement of the storage objects (12),
- conveying the storage objects (12) on the conveying means (28) in sequenced order out of the high bay storage unit.

2. Method according to claim 1, **characterised by**:
- bridging or at least temporarily bridging at least one remaining aisle (22) of the high bay storage unit between the two rows of shelves (14, 16, 18) of the high bay storage unit for the formation of the exit (y) of the high bay storage unit adjoining the moving out path (x).

3. Method according to claim 1 or 2, **characterised by**:
- connecting the static portions (24) of the exit (y) in the region of the rows of shelves (14, 16, 18) with a bridge (26) to form the exit (y) with the temporary bridging of two rows of shelves (14, 16, 18) of the high bay storage unit forming an aisle (22).

4. Method according to claim 2 or 3, **characterised by**:
- freeing the aisle (22) by removal of the bridge for forming the moving out path (x) for the reciprocating device (20) intersecting the exit (y).

5. Method according to one of the preceding claims, **characterised by**:
- driving below and lifting the storage object (12) for conveying the storage object (12) orthogonally to the moving out path (x) for placing the storage object (12) into or out of storage.

6. Method according to one of the preceding claims, **characterised by**:
- removing storage objects (12) by the conveying means (28) with a plurality of individually actuable storage places (32) provided with the conveying auxiliary devices (30),
- sequencing the storage objects (12) by means of the conveying auxiliary devices (30) at the storage spaces (32) of the conveying means (28).

7. Method according to claim 6, **characterised in that** a larger storage object (12) can be placed into or out of storage by means of a plurality of conveying auxiliary devices (30) which are simultaneously actuable in parallel.

8. High bay storage unit for storing storage objects (12) with:
- a plurality of storage locations (10), which are optionally fillable with a plurality of storage objects (12),
- a plurality of rows of shelves (14, 16, 18),
- at least one moving out path (x) arranged between two rows of shelves (14, 16, 18),
- at least one exit (y) arranged transversely to the moving out path (x),
- at least one reciprocating device (20) for conveying, along the moving out path (x) to the exit (y), at least one storage object (12) storable at a storage location (10) in the high bay storage unit,
- wherein adjacent to the exit (y) there are arranged in the high bay storage unit storage locations (10) as caching locations (11) for storage objects (12) accessible from the exit (y), in which storage places the storage objects (12) can be placed into and out of storage by the at least one reciprocating device transversely to the moving out path (x) and starting from the reciprocating device along an introducing direction to the caching location,
- wherein at least one conveying auxiliary device (30) mounted on a conveying means (28), which is actuable independently of the reciprocating device (20), is provided for selectively picking at least one of the storage objects (12) located at the individually accessible storage places in the caching location (11) transversely to the exit and also transversely to the introducing direction to the caching location (11) and already at the conveying means (28) in sequenced order,
- wherein the conveying means (28) receives a plurality of storage objects (12) from the caching location (11) without rearrangement and conveys the plurality of storage objects (12) along the exit (y) in sequenced order.

9. High bay storage unit according to claim 8, **characterised in that** at least one aisle (22) of the high bay storage unit remaining between the two rows of shelves (14, 16, 18) of the high bay storage forms the moving out path (x) of the high bay storage unit adjoining the exit (y).

10. High bay storage unit according to claim 8 or 9, **characterised in that** a bridge (26) in the region of the rows of shelves (14, 16, 18) and at least temporarily bridging the moving out path (x) connects static portions (24) of the exit (y) to each other and
the moving out path (x), along which the reciprocating device (20) moves, and the exit (y) intersect, along which the conveying means (28) moves.

11. High bay storage unit according to one of claims 8 to 10, **characterised in that** the conveying means (28) movable along the exit (y) comprises a plurality of storage spaces (32) provided with the conveying auxiliary means (30) and actuable individually or simultaneously.

## Revendications

1. Procédé d'exécution d'un cycle de travail d'un entrepôt à hauts rayonnages avec plusieurs rangées de rayonnages (14, 16, 18) et plusieurs emplacements de stockage (10), lesquels peuvent être remplis si nécessaire avec plusieurs objets à stocker (12), comportant :
- la formation d'au moins un chemin de déplacement de sortie (x) entre un emplacement de stockage (10) de l'entrepôt à hauts rayonnages (10) et au moins une sortie (y) disposée perpendiculairement au chemin de déplacement (x), le chemin de déplacement de sortie (x) étant disposé entre deux rangées de rayonnages (14, 16, 18),
- l'amenée d'au moins un objet à stocker (12) stockable dans l'entrepôt à hauts rayonnages sur un emplacement de stockage (10) au moyen d'un dispositif de levage (20) le long du chemin de déplacement de sortie (x) à la sortie (y),
- le tamponnage du ou des objet(s) à stocker (12) entre l'amenée perpendiculairement au chemin de déplacement de sortie (x) près de la sortie (y) sur des emplacements de stockage sur un lieu de tamponnage (11) dans l'entrepôt à hauts rayonnages, en partant du dispositif de levage le long d'une direction de mise en place sur le lieu de tamponnage,
- le retrait de plusieurs objets à stocker (12) du lieu de tamponnage (11) au moins d'un moyen de transport (28) déplaçable de long de la sortie (y) et actionnable indépendamment du dispositif de levage (20), ayant au moins d'un outil de transport (30) pour une saisie sélective d'au moins l'un des objets à stocker (12) se trouvant sur les emplacements de stockage accessibles individuellement au niveau du lieu de tamponnage (11) perpendiculairement à la sortie ainsi que perpendiculairement à la direction de mise en place sur le lieu de tamponnage et dans l'ordre souhaité pour le séquencement des objets à stocker (12) déjà sur le moyen de transport (28) dans l'entrepôt à hauts rayonnages sans déplacer les objets à stocker (12),
- la sortie des objets à stocker (12) se trouvant sur le moyen de transport (28) hors de l'entrepôt à hauts rayonnages dans l'ordre séquentiel.

2. Procédé selon la revendication 1, caractérisé en ce par :
- l'enjambement ou du moins l'enjambement temporaire d'au moins d'une allée de l'entrepôt à hauts rayonnages située entre les deux rangées de rayonnages (14, 16, 18) de l'entrepôt à hauts rayonnages pour la formation de la sortie (y) prolongeant le chemin de déplacement de sortie (x) de l'entrepôt à hauts rayonnages.

3. Procédé selon la revendication 1 ou 2, **caractérisé par** :
- la liaison des sections immobiles (24) dans la zone des rangées de rayonnages (14, 16, 18) de la sortie (y) avec un pont (26) pour la formation de la sortie (y) par enjambement temporaire des deux rangées de rayonnages (14, 16, 18) de l'entrepôt à hauts rayonnages formant une allée (22).

4. Procédé selon la revendication 2 ou 3, **caractérisé par** :
- la libération de l'allée (22) par la suppression du pont pour la formation du chemin de déplacement de sortie (x) coupant la sortie (y) pour le dispositif de levage (20).

5. Procédé selon l'une des revendications précédentes, **caractérisé par** :
- la mise en place en dessous et le soulèvement de l'objet à stocker (12) pour l'amenée de l'objet à stocker (12) perpendiculairement au chemin de déplacement de sortie (x) en vue d'un stockage ou déstockage de l'objet à stocker (12).

6. Procédé selon l'une des revendications précédentes, **caractérisé par** :
- la mise d'objets à stocker (12) sur des places (32) à l'aide du moyen de transport (28) équipé de plusieurs outils de transport (30) actionnables individuellement,
- le séquencement des objets à stocker (12) à l'aide des outils de transport (30) sur les places (32) du moyen de transport (28).

7. Procédé selon la revendication 6, **caractérisé en ce qu'**un objet à stocker plus grand (12) peut être stocké ou déstocké à l'aide de plusieurs outils de transport (30) actionnables parallèlement simul tanément.

8. Entrepôt à hauts rayonnages pour stocker des objets à stocker (12), comportant :
- plusieurs emplacements de stockage (10) qui peuvent être remplis si nécessaire avec plusieurs objets à stocker (12),
- plusieurs rangées de rayonnages (14, 16, 18),
- au moins un chemin de déplacement de sortie (x) disposé entre deux rangées de rayonnages (14, 16, 18),
- au moins une sortie (y) disposée perpendiculairement au chemin de déplacement de sortie (x),
- au moins un dispositif de levage (20) pour amener au moins un objet à stocker (12) stockable sur un emplacement de stockage (10) dans l'entrepôt à hauts rayonnages le long du chemin de déplacement de sortie (x), à la sortie (y),
- dans lequel, près de la sortie (y), sont disposés, en tant que lieux de tamponnage (11) pour des objets à stocker (12) dans l'entrepôt à hauts rayonnages accessibles depuis la sortie (y), des emplacements de stockage (10) dans lesquels des objets à stocker (12) peuvent être stockés et déstockés sur les lieux de tamponnage par la ou les dispositifs) de levage perpendiculairement au chemin de déplacement de sortie (x) et à partir du dispositif de levage le long d'une direction de mise en place,
- dans lequel est déjà prévu sur le moyen de transport (28), au moins un outil de transport (30) monté sur un moyen de transport (28) actionnable indépendamment du dispositif de levage (20) pour la saisie sélective d'au moins l'un des objets à stocker (12) se trouvant sur les emplacements de stockage accessibles individuellement au niveau des lieux de tamponnage (11) perpendiculairement à la sortie ainsi que perpendiculairement à la direction de mise en place sur les lieux de tamponnage (11) et dans l'ordre séquentiel,
- dans lequel le moyen de transport (28) retire plusieurs objets à stocker (12) du lieu de tamponnage (11) sans modifier leur disposition relative et met ces objets à stocker (12) le long de la sortie (y) dans l'ordre séquentiel.

9. Entrepôt à hauts rayonnages selon la revendication 8, **caractérisé en ce qu'**au moins une allée (22) située entre les deux rangées de rayonnages (14, 16, 18) de l'entrepôt à hauts rayonnages forme le chemin de déplacement de sortie (x) du stockage à étages hautes prolongeant la sortie (y).

10. Entrepôt à hauts rayonnages selon la revendication 8 ou 9, **caractérisé en ce qu'**un pont (26) contournant au moins temporairement le chemin de déplacement de sortie (x) relie ensemble des sections immobiles (24) de la sortie (y) dans la zone des rangées de rayonnages (14, 16, 18) et le chemin de déplacement de sortie (x), le long duquel le dispositif de levage (20) se déplace, et la sortie (y) se coupent, sortie le long de laquelle le moyen de transport (28) se déplace.

11. Entrepôt à hauts rayonnages selon l'une des revendications 8 à 10, **caractérisé en ce que** le moyen de transport (28) déplaçable le long de la sortie (y) présente plusieurs places (32) actionnables individuellement ou simultanément parallèlement équipées avec les outils de transport (30).
